# EUROPÄISCHE PATENTANMELDUNG

(11) **EP 3 943 037 A2**
(43) Veröffentlichungstag der Anmeldung: **26.01.2022**
(21) Anmeldenummer: 21187461.5
(22) Anmeldetag: 23.07.2021
(51) Int. Cl.: A61C 1/05, A61C 1/06, A61C 1/08, A61C 1/18, H02K 1/20

(54) **ELEKTROMOTOR FÜR DENTALE UND MEDIZINISCHE ZWECKE**

(30) Priorität: 24.07.2020 DE 102020119635
(71) Anmelder: SycoTec GmbH & Co. KG, 88299 Leutkirch im Allgäu (DE)
(72) Erfinder: Kohler, Klaus, 88299 Leutkirch (DE); Gutmann, Simon, 88250 Weingarten (DE)
(74) Vertreter: Patentanwälte Olbricht, Buchhold, Keulertz Partnerschaft mbB

(57) **Zusammenfassung**

Es wird ein Elektromotor für dentale und medizinische Zwecke vorgeschlagen, insbesondere für den Antrieb eines rotierenden dentalen oder medizinischen Instruments, umfassend ein Gehäuse, einen in dem Gehäuse angeordneten Stator mit einem Spulenträger, der zumindest abschnittsweise eine Wicklung trägt, einen in dem Stator um eine Längsachse drehbar gelagerten Rotor, der konzentrisch von dem Stator umschlossen ist. Der Elektromotor zeichnet sich durch eine kompakte Bauweise, bei gleichzeitiger Umsetzung von Luft- und Kriechstrecken, aus. Gemäß der Erfindung ist vorgesehen, dass der Spulenträger wenigstens eine Medienleitung aufweist. Des Weiteren zeichnet sich der Elektromotor durch eine geschickte Verschachtelung seiner Komponenten, einer teilweise ummantelten Beleuchtungseinheit und einer besonders kompakt gestalteten schwimmenden Lagerung des Rotors aus.

## Beschreibung

Die Erfindung betrifft einen Elektromotor für dentale oder medizinische Zwecke gemäß dem Oberbegriff von Anspruch 1.

Derartige Elektromotoren werden für den Antrieb von rotierenden dentalen oder medizinischen Instrumenten (dentale Hand- oder Winkelstück) eingesetzt, beispielsweise Bohrvorrichtungen für zahnärztliche Zwecke, wobei das Instrument meist über eine genormte Steckkupplung (z.B. eine Kupplung nach DIN ISO 3964) mit dem Elektromotor verbunden wird. Dabei wird ein vom Elektromotor erzeugtes Drehmoment auf das Instrument übertragen.

Während der Behandlung des Patienten sind über das Instrument und damit über den Elektromotor fluide Medien bereitzustellen, die bei Bedarf am oder im Bereich des Instrumentenkopfes austreten sollen. Dazu sind innerhalb des Elektromotors Medienleitungen vorgesehen, welche die Medien getrennt voneinander dem Instrument zuführen. Bei den Medien handelt es sich meist um Wasser und Luft. Es können aber auch Strom, Licht, Daten u.dgl. benötigt werden.

WO 2010 106 157 offenbart eine Elektromotoranordnung, bei der separate Medienrohre in der Wicklung des Stators integriert sind. Hierzu weist der Stator einen rippenförmigen Spulenträger mit Rastelementen auf, die zur Fixierung der Medienrohre dienen.

DE 10 2007 062 541 A1 offenbart einen Elektromotor, bestehend aus einem auf einer Rotorwelle drehbar gelagerten Rotor und einem den Rotor umgebenden Stator, wobei der Stator einen Rückschlusskörper und eine mit Strom beaufschlagbare Wicklung aufweist. Die notwendigen Medienleitungen sind zumindest teilweise innerhalb des Rückschlusskörpers ausgebildet, der hierzu mit einem schlauchartigen Kanal, einem Tunnel oder einer Bohrung versehen ist.

EP 2 073 359 A1 ordnet die Medienleitungen ebenfalls im Stator an, wobei die Leitungen zwischen Abschnitten der Statorwicklung angeordnet sind.

Alle vorbekannten Lösungen verwenden separate Medienrohre, was sich ungünstig auf die Herstellkosten auswirkt, weil das Einbringen der Medienrohre einen deutlichen fertigungstechnischen Mehraufwand darstellt. Des Weiteren wirkt sich dies auch ungünstig auf die Baugröße des Elektromotors aus, weil für die Medienrohre entsprechend Platz vorgesehen sein muss. Zudem müssen die Medienrohre innerhalb des Elektromotors fixiert werden, was zusätzliche Fixierelemente verlangt.

Zur Umsetzung einer Schutzmaßnahme zur Minderung des Risikos eines elektrischen Schlages (nach IEC 60601-1) sind zudem alle stromführenden Bauteile so zu isolieren, dass die vorgeschriebenen Luft- und Kriechstrecken realisiert werden. Dies erfordert die Integration zusätzlicher elektrisch isolierender Elemente, die alle stromführenden Bauteile so umgeben, dass alle Komponenten, die vom Patienten oder Anwender berührbar sind, isoliert werden. Dies erhöht die Bauraumforderung, das Gewicht und die Herstellkosten deutlich.
Ziel der Erfindung ist es, unter Überwindung dieser und weiterer Nachteile des Standes der Technik, einen Elektromotor für dentale oder medizinische Zwecke zu schaffen, der eine sehr kompakte Bauform ermöglicht und sowohl kostengünstig als rationell hergestellt werden kann.

Die Aufgabe wird gemäß der vorliegenden Erfindung durch einem Elektromotor nach Anspruch 1 gelöst.

Vorteilhafte Ausgestaltungen der Erfindung sind Gegenstand der Ansprüche 2 bis 20.

Es wird ein Elektromotor für dentale und medizinische Zwecke vorgeschlagen, insbesondere für den Antrieb eines rotierenden dentalen oder medizinischen Instruments, umfassend ein Gehäuse, einen in dem Gehäuse angeordneten Stator mit einem Spulenträger, der zumindest abschnittsweise eine Wicklung trägt, einen in dem Stator um eine Längsachse drehbar gelagerten Rotor, der konzentrisch von dem Stator umschlossen ist und eine Kupplung zum Anschließen eines dentalen oder medizinischen Instruments. Gemäß der Erfindung ist vorgesehen, dass der Spulenträger wenigstens eine Medienleitung bildet, wobei jede Medienleitung einteilig, vorzugsweise monolithisch, mit dem Spulenträger ausgebildet ist.

Das Gehäuse stellt eine äußere Begrenzung des Elektromotors dar und umschließt sämtliche für die Funktion des Elektromotors notwendigen Komponenten. Es ist bevorzugt aus einem metallischen Material hergestellt, sodass es ausreichend robust ist, sich gut handhaben lässt und mit gängigen Desinfektionsmitteln behandelbar ist. An einer vorderen Stirnseite können dentale oder medizinische Instrumente angeordnet werden. An einer hinteren Stirnseite könnten erforderliche Versorgungsschläuche für Luft, Wasser und Strom oder dergleichen angeordnet sein. Im Elektromotor werden alle für die Realisierung der elektrischen Schutzmaßnahme vorgeschriebenen Luft- und Kriechstrecken eingehalten, obwohl der erfindungsgemäße Elektromotor sehr kompakt ausgestaltet ist.

Der Stator wird im Wesentlichen durch den Spulenträger definiert. Dieser könnte beispielhaft konzentrisch in einem Abschnitt des Gehäuses angeordnet sein. Der Spulenträger trägt zumindest abschnittsweise eine mit Strom beaufschlagbare Wicklung, welche zusammen mit dem Rotor die Funktion des Elektromotors bereitstellt. Die Wicklung könnte sich beispielsweise auf einer Außenseite des Spulenträgers befinden. Im Wesentlichen könnte der Spulenträger zylindrisch geformt sein. Es ist sinnvoll, die Wicklung radial nach außen hin zum Gehäuse durch eine Hülse zu isolieren, welche innen an das Gehäuse angrenzen oder hiervon etwas beabstandet sein könnte.

Der drehbar gelagerte Rotor ist bevorzugt konzentrisch zu dem Stator angeordnet. Er könnte bevorzugt Permanentmagnete tragen, die auf ein von der Wicklung erzeugtes magnetisches Drehfeld reagieren und eine Rotation bewirken. Der Rotor kann eine Welle aufweisen, die insbesondere zu der vorderen Stirnseite gerichtet und dort mit dentalen oder medizinischen Instrumenten verbindbar ist.

Erfindungsgemäß weist der Spulenträger wenigstens eine Medienleitung auf. Die Medienleitung ist als eine fluidführende Verbindung zu verstehen, welche in dem Spulenträger ausgebildet ist. Bevorzugt ist der Spulenträger aus einem elektrisch isolierenden Material hergestellt. Er könnte aus einem Kunststoff hergestellt sein, der zu der Form des Spulenträgers spanend bearbeitet ist oder gegossen, insbesondere spritzgegossen ist. In ihm sind die Medienleitungen integriert und werden, anders als bei bekannten Dentalmotoren oder ähnlichen Einrichtungen, nicht separat vorgesehen. Es ist bevorzugt, dass jede Medienleitung einteilig, vorzugweise monolithisch mit dem Spulenträger ausgebildet ist.

Konstruktiv stellt dies einen erheblichen Vorteil bei der Ausgestaltung des erfindungsgemäßen Elektromotors dar. Die elektrische Isolierung und somit die Erreichung der Luft- und Kriechstrecken kann dadurch sehr leicht sichergestellt werden, obwohl der erfindungsgemäße Elektromotor eine sehr kompakte Gestalt aufweist. Ein kostenintensives Einbringen von Medienleitungen als separates Leitungselement, üblicherweise als metallisches Rohr, wird umgangen.

Wie vorangehend bereits erwähnt ist es schließlich sinnvoll, dass der Spulenträger aus einem Kunststoff gefertigt ist, vorzugsweise aus einem biokompatiblen und sterilisationsbeständigen Kunststoff. Dabei könnte es sich um eine Hochtemperaturpolymere wie beispielsweise PEEK, PPSU, PEI, LCP, PAI, PPS, PSU oder PES handeln.

In einer vorteilhaften Ausführungsform weist der Spulenträger eine Hülse mit einer weitgehend zylindrischen Wandung auf. Die Hülse ist als ein Hohlzylinder zu verstehen, der eine zumindest weitgehend gleichbleibende Wandstärke aufweist. Bevorzugt ist die Hülse des Spulenträgers zu einer Stirnseite hin offen, sodass der Rotor von dieser Stirnseite aus montierbar ist. Zur Anordnung von den Rotor tragenden Lagern kann es zudem sinnvoll sein, in dem Spulenträger verschiedene Absätze zum Anschmiegen eines Lagers und/oder Nuten zum Aufnehmen mindestens eines Elastomerelements, vorzugsweise eines O-Rings, vorzusehen. Da der Spulenträger ein Teil des Stators ist, ist der Spulenträger bevorzugt drehfest mit dem Gehäuse verbunden. Dies kann er entweder direkt oder indirekt über stirnseitig angeordnete zusätzliche Komponenten sein.

Es ist bevorzugt, dass die wenigstens eine Medienleitung als ein Durchbruch in der Hülse ausgebildet ist. Bevorzugt ist jede Medienleitung als ein Durchbruch in der Hülse ausgeführt. Dabei kann ein solcher Durchbruch auch stufenförmig ausgebildet sein. Folglich wird jede Medienleitung durch das Fehlen von Material in dem Spulenträger realisiert. Ein zusätzliches, separates Leitungselement zur Realisierung der Funktion ist nicht erforderlich. Besonders bei der Ausführung des Spulenträgers aus einem isolierenden Material kann es sich anbieten, die Medienleitungen als Durchbrüche zu integrieren, da der Spulenträger dadurch eine Realisierung von ausreichender Luft- und Kriechstrecke von den Medien zu den angrenzenden stromführenden Komponenten begünstigt. Insgesamt wird hierdurch das Gewicht und das notwendige Bauvolumen des Elektromotors reduziert. Die Handhabung durch den Anwender wird dadurch deutlich verbessert. Ein Durchbruch könnte etwa als eine Bohrung ausgeführt sein.

Werden mehrere Medienleitungen in dem Elektromotor eingesetzt, können diese über den Umfang des Spulenträgers verteilt angeordnet sein. Die Anordnung muss nicht zwangsläufig gleichmäßig erfolgen. Vielmehr ist es sinnvoll, zwischen einzelnen Medienleitungen einen gewissen Abstand vorzusehen.

Es ist zudem vorteilhaft, wenn mindestens eine der Medienleitungen jeweils mindestens ein Anschlussende aufweist, das über eine Stirnseite des Spulenträgers vorsteht. Eine oder mehrere Medienleitungen können folglich an einer vorderen Stirnseite und/oder an einer hinteren Stirnseite des Spulenträgers mindestens ein Anschlussende aufweisen, welches dabei über die betreffende Stirnseite hervorsteht. Dadurch könnte eine Fluidverbindung mit einer anderen Komponente erreicht werden, die das betreffende Anschlussende wie eine Buchse umschließt. Die Anschlussenden könnten etwa als zylindrische Verlängerungen ausgeführt sein, die von der jeweiligen Stirnseite abstehen, wobei die Medienleitungen durch die jeweiligen Verlängerungen durchlaufen. Die Anschlussenden könnten an ihrem Außenumfang einen Dichtring tragen. Hierzu könnte jeweils eine umlaufende Nut vorgesehen sein, in der ein Dichtring positioniert ist. Das betreffende Anschlussende kann dadurch in einer das Anschlussende umschließenden Buchse radial abgedichtet werden.

Es kann vorteilhaft sein, wenn ein Außendurchmesser des mindestens einen Anschlussendes der mindestens einen Medienleitung höchstens einer Wandstärke des Spulenträgers entspricht. Somit können die Anschlussenden mit den Nuten für die Dichtelemente möglichst stabil ausgeführt werden. Dies ist insbesondere dann sinnvoll, wenn eine die Anschlussenden tragende Stirnseite mit einer Kappe oder dergleichen abgedeckt wird, die radial bis zu der Innenseite des Gehäuses ragt. Die betreffende Kappe könnte dann Durchbrüche für die Anschlussenden aufweisen, die eine Mindestgröße zum Durchstecken der jeweiligen Anschlussenden aufweisen. Das Durchstecken der Anschlussenden durch die Durchbrüche in der Kappe kann zudem eine formschlüssige Verbindung zwischen der betreffenden Kappe und dem Spulenträger hervorrufen.

An dieser Stelle sei darauf hingewiesen, dass selbstverständlich auch andere Varianten denkbar sind, bei denen der Spulenträger an einem oder an beiden stirnseitigen Enden flach abschließt und durch bündiges Anlegen einer angrenzenden Komponente, denkbar auch in Verbindung mit einer dazwischenliegenden Flachdichtung, eine Fluidverbindung herstellbar ist. Auch können die Anschlussenden andere Abmessungen oder Formen aufweisen, die von denen der vorangehend genannten zylindrischen Verlängerungen abweichen.

In einer vorteilhaften Ausführungsform kann der Spulenträger an einer hinteren Stirnseite einen Flansch aufweisen, der in axialer Richtung einen Anschlag für die Wicklung bildet. Die hintere Stirnseite könnte insbesondere die Stirnseite sein, an der ein Versorgungsschlauch positionierbar ist. Die an dieser Stirnseite ausgebildeten Anschlussenden zumindest einer der Medienleitungen können weiterhin axial über die Stirnfläche des Flansches bzw. den Spulenträger vorstehen. Es ist denkbar, ihn als flache, durchaus abgesetzte, senkrecht zur Längsachse angeordnete, in radialer Richtung erstreckende Kreisfläche vorzusehen. Zudem wird die Wicklung in axialer Richtung von dem Flansch abgeschirmt bzw. isoliert. Auf der gegenüberliegenden Seite, d.h. an der vorderen Stirnseite des Spulenträgers, kann eine ähnliche Vorrichtung angeordnet sein.

In dem Spulenträger könnten zusätzliche Medienleitungen ausgebildet sein, die bündig mit den Stirnflächen des Spulenträgers und/oder des vorangehend erwähnten Flansches abschließen. Diese zusätzlichen Medienleitungen können insbesondere Kühlluft in den Elektromotor leiten.

Der Flansch könnte weiterhin einen Zentrierzapfen tragen, wobei die Länge von Anschlusselementen, sprich der Anschlussenden sowie elektrischer Kontaktstifte, kleiner ist als die Länge des Zentrierzapfens. Der Zentrierzapfen könnte ein radial innenliegendes Element sein, welches nah an der Längsachse verläuft. Dadurch kann ein Steckerelement eines Versorgungsschlauchs mit konträren Anschlusselementen, präzise an dem Elektromotor ausgerichtet werden. Das Überschreiten der Längen der Anschlusselemente führt dazu, dass beim Koppeln eines Versorgungsschlauchs die konträren Anschlusselemente zuerst zueinander ausgerichtet werden, bevor die Verbindung der Anschlusselemente erfolgt. Dadurch wird zum einen verhindert, dass die Anschlusselemente beschädigt werden und zum anderen wird nach erfolgter Zentrierung die Verbindung der Anschlussenden erleichtert. Das Anschließen des Elektromotors ist folglich sehr anwenderfreundlich.

Es ist weiterhin vorteilhaft, wenn der Spulenträger an der vorderen Stirnseite oder an einer gegenüberliegenden hinteren Stirnseite zumindest abschnittsweise zylinderförmig ausgebildet ist und eine Isolierkappe trägt. Eine der beiden Stirnseiten könnte zur Montage des Rotors geöffnet sein. Ist der Spulenträger dort im Wesentlichen zylinderförmig ausgebildet, kann der Rotor mitsamt Lagern, die den Rotor tragen, in den Spulenträger hineingeschoben werden. Zum Abschließen des Spulenträgers kann eine Isolierkappe vorgesehen sein. Es ist außerdem denkbar, an beiden Seiten des Spulenkörpers eine Isolierkappe bereitzustellen. Diese können unterschiedlich ausgebildet sein und zur Realisierung der erforderlichen Luft- und Kriechstrecken wesentlich beitragen.

Wird eine Isolierkappe an einer Stirnseite vorgesehen, an der Anschlussenden vorliegen, könnte die Isolierkappe mindestens einen Durchbruch zum Durchführen der Anschlussenden aufweisen. Die Isolierkappe kann damit auch mit einer betreffenden Stirnseite formschlüssig verbunden werden.

Es kann vorteilhaft sein, wenn die Länge der die Durchbrüche durchragenden Anschlussenden derart gewählt ist, dass letztere über eine äußere Stirnfläche der Isolierkappe vorstehen. Die aus den Anschlussenden fließenden Medien können hierdurch die Isolierkappe direkt durchdringen und von dort abgenommen bzw. weitergeführt werden.

Zudem könnte die Isolierkappe an einer der Wicklung zugewandten Seite einen radial umlaufenden Außenkragen aufweisen, der die Wicklung zumindest in axialer Richtung abschnittsweise umschließt. Die innere Stirnseite der Isolierkappe weist folglich eine Innenkontur auf, welche die Stirnseite der Wicklung zumindest abschnittsweise umschließt. Insbesondere kann der Außenkragen zumindest abschnittsweise direkt an die Innenseite des Gehäuses anschließen. Dieser Außenkragen trägt maßgeblich zur Realisierung der Luft- und Kriechstrecken bei.

Es ist weiterhin bevorzugt, wenn die Isolierkappe einen Innenkragen aufweist, der zwischen den Spulenträger und die Wicklung greift. Dazu ist ein Wickelkopf der Wicklung besonders ausgestaltet und weist eine Einbuchtung in axialer Richtung auf, in die der Innenkragen der Isolierkappe eingreifen kann. Die zu der Wicklung hin gebildete Kriechstrecke wird vergrößert und insbesondere auf ein gefordertes Maß verlängert.

Es ist bevorzugt, wenn die Wicklung von einer separaten Isolierhülse umgeben ist, die eine Isolation zum Gehäuse schaffen kann. Die Isolierhülse und der Spulenträger schließen die Wicklung radial innen- und außenliegend ein. Die separate Isolierhülse ist folglich bevorzugt aus einem isolierenden Material gefertigt.

Zudem könnte die Isolierhülse zusammen mit dem vorangehend genannten Flansch des Spulenträgers und/oder die vorangehend genannte mindestens eine Isolierkappe die Wicklung auch in axialer Richtung einschließen. Die Wicklung kann hierdurch vollständig gekapselt werden, um die erforderlichen Luft- und Kriechstrecken realisieren zu können.

In einer vorteilhaften Ausführungsform überlappen sich die Isolierkappe, insbesondere der Außenkragen der Isolierkappe, und die Isolierhülse radial zumindest abschnittsweise. Wird der vorangehend erwähnte Flansch des Spulenträgers eingesetzt, kann sich auch dieser zumindest abschnittsweise insbesondere mit der Isolierhülse axial überlappen. Für eine Überlappung können geeignete radiale und/oder axiale Abschnitte, Vorsprünge, Einbuchtungen oder andere Formmerkmale vorgesehen werden, die jeweils eine Überlappung hervorrufen.

Die geschickte Verschachtelung der Komponenten, hier bevorzugt durch Spulenträger, Isolierkappe und Isolierhülse, in Form einer Überlappung erlaubt es, effektiv die Luft- und Kriechstrecken einzuhalten und gleichzeitig den Elektromotor möglichst kompakt ausgestalten zu können.

Weiterhin ist es vorteilhaft, wenn ein Isolationskragen vorgesehen ist, der Anschlusselemente am Verbindungsabschnitt radial einschließt und dessen axiale Länge so gewählt ist, dass vorgegebene Luft- und Kriechstrecken erfüllt werden. Der Isolationskragen kann sich in dieser Ausführungsform direkt an die Isolierhülse anschließen und ein Teil davon sein. Bei den Anschlusselementen kann es sich insbesondere um Kontaktstifte einer Beleuchtungseinheit oder der Wicklung handeln. Aber auch Kontaktstifte, insbesondere stromführender Teile, anderer Komponenten wären denkbar.

Der Isolationskragen realisiert die Isolation beziehungsweise die Erreichung der geforderten Luft- und Kriechstrecken zu Komponenten des Elektromotors und auch des Versorgungsschlauchs, die elektrisch leitend und vom Anwender und/oder Patienten berührbar sind. Bei diesen Komponenten handelt es sich insbesondere um das Gehäuse des Elektromotors und eine Überwurfhülse des Versorgungsschlauchs.

In einer vorteilhaften Ausführung weist der Elektromotor eine Beleuchtungseinheit auf, die so ausgestaltet beziehungsweise isoliert ist, dass die Luft- und Kriechstrecken eingehalten werden und der Motor gleichzeitig möglichst kompakt bleibt. Des Weiteren weist die Beleuchtungseinheit keine offenliegenden Verbindungsstellen, wie Lötstellen oder offenliegende elektrische Komponenten auf, die durch eine Sterilisation, unter anderem mit Wasserdampf, angreifbar oder beschädigbar wären. Details hierzu, insbesondere zu einer isolierenden, sterilisationsbeständigen Ummantelung sind weiter nachfolgend zu entnehmen.

Die Beleuchtungseinheit kann bevorzugt mit einer Lichtquelle direkt unter oder in einer Lichtaustrittsöffnung in einem der Kupplung nahen Bereich oder an der Isolierkappe angeordnet sein. Bei der Lichtquelle kann es sich um eine LED (einen LED-Chip oder SMD-LED) handeln, wobei mindestens eine LED auf einem Trägerelement für elektronische Bauteile, beispielsweise einer flachen Platine, angeordnet sein kann. Vorzugsweise ist auf dem Trägerelement neben dem LED-Chip auch ein Widerstand angeordnet. Von dem Trägerelement aus könnten elektrische Leiter, vorzugsweise Kontaktstifte, abgehen, die zum Anbinden der Beleuchtungseinheit an eine Spannungsversorgung dienen. Dadurch kann eine Beleuchtungsfunktion bereitgestellt werden.

Die Beleuchtungseinheit könnte entlang der Längsachse des Elektromotors eingesteckt sein, wobei sich die mindestens eine Lichtquelle bei der Lichtaustrittsöffnung in der Kupplung befindet und die Kontaktstifte durch die Isolierkappe und den Spulenträger ragen und an der hinteren Stirnseite des Spulenträgers heraustreten. Somit können die Kontaktstifte mit komplementär geformten Anschlusselementen eines Versorgungsschlauchs gekoppelt werden.

In einer vorteilhaften Ausführungsform sind die mindestens eine Lichtquelle sowie die Trägerplatine vollständig gekapselt beziehungsweise isoliert und die elektrischen Leiter zumindest abschnittsweise isoliert. Die Kapselung der genannten Bauteile könnte durch eine Ummantelung geschehen. Dadurch werden die erforderlichen Luft- und Kriechstrecken realisiert. Die Ummantelung ist mit einem isolierenden sowie transparenten Material realisiert.

Die Ummantelung der elektrischen Leiter könnte auch mit Hülsen aus einem anderen, nicht transparenten aber isolierenden Material sein, wobei der Übergang von Ummantelung und der betreffenden Hülsen bündig, d.h. direkt, angebunden an die Ummantelung und ohne Unterbrechung der elektrischen Isolation, ausgeführt ist.

Die Ummantelung könnte zudem ein optisches Element zur optischen Beeinflussung eines von der mindestens einen Lichtquelle abgegebenen Lichts aufweisen, beispielsweise in Form einer Fokussier-Linse. Dadurch wird das von der Lichtquelle abgegebene Licht effektiv gebündelt und wird in einen Lichtleiter eines Instruments eingeleitet.

Durch die zumindest teilweise Ummantelung der Beleuchtungseinheit können die Luft- und Kriechstrecken zu Gehäuse, Kupplung und Rotor eingehalten werden ohne den Motor unnötig größer gestalten zu müssen.

Es ist weiterhin vorteilhaft, wenn zwischen dem Stator und dem Rotor mindestens ein Lager angeordnet ist, wobei das Lager gegenüber dem Spulenträger zusätzlich mittels eines Elastomerelements gelagert ist. Das Elastomerelement kann beispielsweise ein O-Ring sein. Der Rotor weist bevorzugt zwei insbesondere axial voneinander beabstandete Lager auf, die beispielsweise als Wälzlager ausgestaltet sind. Bevorzugt weist das mindestens eine Lager einen Außenring und einen Innenring auf. Der Innenring und der Außenring könnten jeweils ein Ring eines Wälzlagers sein.

Vorteilhaft ist, wenn das Elastomerelement innerhalb des zylindrischen Bauraums des Rotors angeordnet ist, wobei das Elastomerelement in eine radial umlaufende Nut im Außenring des Lagers eingelassen ist. Das jeweilige Elastomerelement ist demnach nicht in der Innenwandung des Spulenträgers ausgebildet oder angeordnet. Das Einlassen des Elastomerelements in den Außenring erlaubt eine geringstmögliche Wandstärke des Spulenträgers und folglich eine besonders kompakte Bauform des Elektromotors.

Diese Lagerung des mindestens einen Lagers durch das zusätzliche Einbringen eines Elastomerelements ist vorteilhaft, da Zwangskräfte oder Dimensionsveränderungen innerhalb des Elektromotors ausgeglichen werden, die insbesondere bei unterschiedlichen Lasten oder Temperaturen auftreten könnten.

Die Erfindung betrifft ferner einen Elektromotor für dentale und medizinische Zwecke, insbesondere für den Antrieb eines rotierenden dentalen oder medizinischen Instruments, umfassend ein Gehäuse, einen in dem Gehäuse angeordneten Stator, mit einem Spulenträger, der zumindest abschnittsweise eine Wicklung trägt, und einen in dem Stator um eine Längsachse drehbar gelagerten Rotor, der konzentrisch von dem Stator umschlossen ist. Gemäß der Erfindung ist vorgesehen, dass der Spulenträger hülsenförmig ausgebildet ist und eine zylindrische Wandung mit definierter Wandstärke aufweist, dass der Spulenträger an einer Stirnseite einen Flansch aufweist und an einer entgegengesetzt angeordneten Stirnseite offen ausgebildet ist, dass auf die offene Stirnseite eine Isolationskappe aufgesetzt ist, dass der Spulenträger von einer separaten Isolierhülse umgeben ist, wobei der Spulenträger, der Flansch, die Abdeckkappe und die Isolierhülse gemeinsam die Wicklung einschließen, wobei sich zumindest zwei des Spulenträgers, des Flanschs, der Abdeckkappe und der Isolierhülse zumindest abschnittsweise überlappen. Sämtliche vorangehend erwähnten Ausführungsformen sind auch auf diesen Elektromotor anwendbar.

Bei diesem Elektromotor könnte die Isolierkappe einen Innenkragen aufweisen, der zwischen den Spulenträger und die Wicklung greift, wobei ein Wickelkopf der Wicklung eine Einbuchtung aufweist, in die der Innenkragen eingreifen kann. Die zu der Wicklung hin gebildete Kriechstrecke wird damit vergrößert und insbesondere auf ein gefordertes Maß verlängert.

Es ist vorteilhaft, wenn ein Isolationskragen vorgesehen ist, der Anschlusselemente am Verbindungsabschnitt radial einschließt und dessen axiale Länge so gewählt ist, dass vorgegebene Luft- und Kriechstrecken erfüllt werden. Wie vorangehend bereits erwähnt kann sich der Isolationskragen in dieser Ausführungsform direkt an die Isolierhülse anschließen und/oder ein Teil davon sein. Bei den Anschlusselementen kann es sich insbesondere um Kontaktstifte einer Beleuchtungseinheit oder der Wicklung handeln. Aber auch Kontaktstifte, insbesondere stromführender Teile, anderer Komponenten sind denkbar.

Die Isolierkappe könnte an einer dem Spulenträger zugewandten Seite einen Außenkragen aufweisen, der die Wicklung zumindest abschnittsweise umschließt. Eine innere Stirnseite der Isolierkappe kann dazu eine Innenkontur aufweisen, welche die Stirnseite der Wicklung zumindest abschnittsweise umschließt. Insbesondere kann der Außenkragen zumindest abschnittsweise direkt an die Innenseite des Gehäuses anschließen. Dieser Außenkragen kann dabei maßgeblich zur Realisierung der Luft- und Kriechstrecken beitragen.

Bei dieser Ausführungsform könnte der Spulenträger ebenso eine Hülse mit einer weitgehend zylindrischen Wandung aufweisen. Die wenigstens eine Medienleitung könnte dann als ein Durchbruch bzw. eine Bohrung in der Hülse ausgebildet sein. Mindestens eine der Medienleitungen könnte mindestens ein Anschlussende aufweisen, das über eine Stirnseite des Spulenträgers vorsteht. Der Außendurchmesser des mindestens einen Anschlussendes der mindestens einen Medienleitung könnte höchstens einer Wandstärke des Spulenträgers entsprechen. Der Spulenträger könnte an einer hinteren Stirnseite einen Flansch aufweisen, der in axialer Richtung einen Anschlag für die Wicklung bildet. Der Spulenträger könnte an der vorderen Stirnseite oder an einer gegenüberliegenden hinteren Stirnseite zumindest abschnittsweise zylinderförmig ausgebildet sein und eine Isolierkappe tragen. Der Spulenträger könnte zudem von einer separaten Isolierhülse umgeben sein, wobei der Spulenträger und die Isolierhülse gemeinsam die Wicklung radial einschließen.

Ferner betrifft die Erfindung einen Elektromotor für dentale und medizinische Zwecke, insbesondere für den Antrieb eines rotierenden dentalen oder medizinischen Instruments, umfassend ein Gehäuse, einen in dem Gehäuse angeordneten Stator, mit einem Spulenträger, der zumindest abschnittsweise eine Wicklung trägt, einen in dem Stator um eine Längsachse drehbar gelagerten Rotor, der konzentrisch von dem Stator umschlossen ist und eine Kupplung zur lösbaren Aufnahme des dentalen oder medizinischen Instruments. Gemäß der Erfindung ist eine einstückige Beleuchtungseinheit vorgesehen, die mindestens eine Lichtquelle aufweist, die dazu ausgebildet ist, Licht aus einer Lichtaustrittsöffnung in oder an der Kupplung abzugeben, wobei zumindest die Lichtquelle mit einer isolierenden, sterilisationsbeständigen Ummantelung isoliert ist. Die Merkmale aller hier erwähnten Ausführungsformen sind auch auf diesen Elektromotor anwendbar. Insbesondere kann diese Ausführungsform auch einen Verbindungsabschnitt zur lösbaren Festlegung eines Versorgungsschlauchs, der wenigstens eine Medienzuführung aufweist, besitzen.

Die Beleuchtungseinheit könnte so ausgestaltet bzw. isoliert sein, dass die Luft- und Kriechstrecken eingehalten werden und der Elektromotor gleichzeitig sehr kompakt bleibt. Des Weiteren könnte die Beleuchtungseinheit bevorzugt ohne offenliegende Verbindungsstellen, wie Lötstellen oder offenliegende elektrische Komponenten, realisiert sein, die durch eine Sterilisation, unter anderem mit Wasserdampf, angreifbar oder beschädigbar wären.

Eine einstückige Gestaltung führt zu einer zusammenhängenden Einheit, die sich leicht in den Elektromotor einsetzen lässt. Die Einstückigkeit kann insbesondere durch eine Kapselung oder Ummantelung erreicht werden, durch die die erwähnten Luft- und Kriechstrecken realisiert sind.

Die Beleuchtungseinheit könnte in einer vorteilhaften Ausführungsform in die Isolierkappe eingesetzt sein. Außerdem kann die Beleuchtungseinheit Kontaktstifte und ein Trägerelement aufweisen, wobei die Beleuchtungseinheit bis auf die Kontaktstifte vollständig mit der Ummantelung isoliert ist und wobei die Kontaktstifte zumindest abschnittsweise ummantelt sind.

Wie vorangehend erläutert kann es sich bei der Lichtquelle um eine LED (einen LED-Chip oder SMD-LED) handeln, wobei mindestens eine LED auf dem genannten Trägerelement, etwa einer Platine, angeordnet sein kann. Vorzugsweise ist auf dem Trägerelement neben dem LED-Chip auch ein Widerstand angeordnet. Von dem Trägerelement aus könnten elektrische Leiter, vorzugsweise Kontaktstifte, abgehen, die zum Anbinden der Beleuchtungseinheit an eine Spannungsversorgung dienen.

Die Beleuchtungseinheit könnte entlang der Längsachse des Elektromotors eingesteckt sein, wobei sich die mindestens eine Lichtquelle bei der Lichtaustrittsöffnung in der Kupplung befindet. Die Kontaktstifte könnten in den Verbindungsabschnitt ragen, um beim Anschließen des Versorgungsschlauchs elektrisch angekoppelt zu werden.

Wie ebenso vorangehend erläutert kann die mindestens eine Lichtquelle sowie das Trägerelement vollständig gekapselt bzw. isoliert und die elektrischen Leiter zumindest abschnittsweise isoliert sein. Die Kapselung der genannten Bauteile könnte durch eine Ummantelung aus einem isolierenden Material geschehen, um die erforderlichen Luft- und Kriechstrecken zu erreichen. Die Lichtquelle ist von einem bevorzugt transparenten Material umgeben. Die Ummantelung der elektrischen Leiter könnte indes auch mit Hülsen aus einem anderen, nicht transparenten Material sein, wie vorangehend erläutert.

Hierbei kann die Ummantelung zudem ein optisches Element zur optischen Beeinflussung eines von der mindestens einen Lichtquelle abgegebenen Lichts aufweisen oder bilden, etwa in Form einer Fokussier-Linse. Dadurch wird das von der Lichtquelle abgegebene Licht gebündelt. Dies kann etwa zum Einleiten von Licht in einen Lichtleiter genutzt werden.

Durch die zumindest teilweise Ummantelung der Beleuchtungseinheit können die Luft- und Kriechstrecken zu Gehäuse, Kupplung und Rotor eingehalten werden ohne den Motor unnötig größer gestalten zu müssen.

Ebenso kann der Spulenträger an einer Stirnseite einen Flansch aufweisen und an einer entgegengesetzt angeordneten Stirnseite offen ausgebildet sein. Auf die offene Stirnseite kann eine Isolierkappe aufgesetzt sein, wobei der Spulenträger von einer separaten Isolierhülse umgeben sein kann, wobei der Spulenträger, der Flansch, die Isolierkappe und die Isolierhülse gemeinsam die Wicklung einschließen, wobei sich zumindest zwei des Spulenträgers, des Flanschs, der Isolierkappe und der Isolierhülse zumindest abschnittsweise überlappen. Der Spulenträger könnte auch hier eine Hülse mit einer weitgehend zylindrischen Wandung aufweisen. Die wenigstens eine Medienleitung könnte als ein Durchbruch bzw. eine Bohrung in der Hülse ausgebildet sein. Mindestens eine der Medienleitungen könnte mindestens ein Anschlussende aufweisen, das über eine Stirnseite des Spulenträgers vorsteht. Der Außendurchmesser des mindestens einen Anschlussendes der mindestens einen Medienleitung könnte höchstens einer Wandstärke des Spulenträgers entsprechen. Der Spulenträger könnte an einer hinteren Stirnseite einen Flansch aufweisen, der in axialer Richtung einen Anschlag für die Wicklung bildet. Der Spulenträger könnte an der vorderen Stirnseite oder an einer gegenüberliegenden hinteren Stirnseite zumindest abschnittsweise zylinderförmig ausgebildet sein und eine Isolierkappe tragen. Der Spulenträger könnte zudem von einer separaten Isolierhülse umgeben sein, wobei der Spulenträger und die Isolierhülse gemeinsam die Wicklung radial einschließen. Die Isolierkappe kann auch hier einen Innenkragen aufweisen, der zwischen den Spulenträger und die Wicklung greift, wobei ein Wickelkopf der Wicklung eine Einbuchtung aufweist, in die der Innenkragen eingreifen kann. Ein Isolationskragen kann vorgesehen sein, der Anschlusselemente am Verbindungsabschnitt radial einschließt und dessen axiale Länge so gewählt ist, dass vorgegebene Luft- und Kriechstrecken erfüllt werden. Die Isolierkappe könnte an einer dem Spulenträger zugewandten Seite zudem einen Außenkragen aufweisen, der die Wicklung zumindest abschnittsweise umschließt.

Außerdem betrifft die Erfindung einen Elektromotor für dentale und medizinische Zwecke, insbesondere für den Antrieb eines rotierenden dentalen oder medizinischen Instruments, umfassend ein Gehäuse, einen in dem Gehäuse angeordneten Stator, mit einem Spulenträger, der zumindest abschnittsweise eine Wicklung trägt, einen in dem Stator um eine Längsachse drehbar gelagerten Rotor, der konzentrisch von dem Stator umschlossen ist, und wobei zwischen dem Stator und dem Rotor mindestens ein Lager angeordnet ist. Gemäß der Erfindung ist vorgesehen, dass das mindestens eine Lager eine Aufnahme zum Aufnehmen eines Elastomerelements aufweist und gegenüber dem Spulenträger mittels des Elastomerelements schwimmend gelagert ist.

Der Spulenträger kann, wie vorangehend dargelegt, hülsenförmig ausgebildet sein und eine zylindrische Wandung mit definierter Wandstärke aufweisen. Das mindestens eine Lager kann an der Innenwandung der zylindrischen Wandung anliegen. Das Elastomerelement könnte im zylindrischen Bauraum des Rotors angeordnet sein und am Innenumfang der zylindrischen Wandung anliegen. Durch die schwimmende Lagerung können Spannungen bei wechselnder Temperatur des Elektromotors verhindert werden. Durch die Aufnahme an dem Lager kann insbesondere in radialer Richtung Bauraum reduziert werden.

Das mindestens eine Lager kann einen Innenring und einen Außenring aufweisen, wobei das Elastomerelement in einer umlaufenden Nut als Aufnahme im Außenring eingelassen ist. Hierdurch wird der Aufbau in radialer Richtung sehr kompakt.

Sämtliche vorangehend erwähnten Ausführungsformen sind auch auf diesen Elektromotor anwendbar. Diese umfassen etwa die Medienleitungen, die einteilig, vorzugsweise monolithisch, mit dem Spulenträger ausgebildet sind. Diese können etwa als Durchbrüche bzw. Bohrungen in einer Hülse des Spulenträgers ausgebildet sein. Mindestens eine der Medienleitungen kann mindestens ein Anschlussende aufweisen, das über eine betreffende Stirnseite des Spulenträgers vorsteht. Der Außendurchmesser des mindestens einen Anschlussendes der mindestens einen Medienleitung könnte höchstens einer Wandstärke des Spulenträgers entsprechen. Der Spulenträger könnte an einer hinteren Stirnseite einen Flansch aufweisen, der in axialer Richtung einen Anschlag für die Wicklung bildet. Der Spulenträger kann an der vorderen Stirnseite oder an einer gegenüberliegenden hinteren Stirnseite zumindest abschnittsweise zylinderförmig ausgebildet sein und eine Isolierkappe tragen. Weiterhin kann der Spulenträger von einer separaten Isolierhülse umgeben sein, wobei der Spulenträger und die Isolierhülse gemeinsam die Wicklung radial einschließen. Ebenso kann der Spulenträger an einer Stirnseite einen Flansch aufweisen und an einer entgegengesetzt angeordneten Stirnseite offen ausgebildet sein. Auf die offene Stirnseite kann eine Isolierkappe aufgesetzt sein, wobei der Spulenträger von einer separaten Isolierhülse umgeben sein kann, wobei der Spulenträger, der Flansch, die Isolierkappe und die Isolierhülse gemeinsam die Wicklung einschließen, wobei sich zumindest zwei des Spulenträgers, des Flanschs, der Isolierkappe und der Isolierhülse zumindest abschnittsweise überlappen. Weiterhin kann auch hier die vorangehend erläuterte Beleuchtungseinheit in allen vorangehend dargestellten Varianten integriert werden.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: den Elektromotor in einer perspektivischen Darstellung,
- Fig. 2: den Stator in einem Schnitt durch eine Medienleitung,
- Fig. 3: den Elektromotor in einem Schnitt durch eine Medienleitung,
- Fig. 4: ein erster Detailschnitt des Verbindungsabschnitts,
- Fig. 5: ein zweiter Detailschnitt des Verbindungsabschnitts mit angeschlossenem Versorgungsschlauch,
- Fig. 6a-6c: mehrere Darstellungen der Beleuchtungseinheit,
- Fig. 7: die Integration der Beleuchtungseinheit in den Elektromotor (hier: Darstellung ohne Gehäuse), und
- Fig. 8: eine Rückansicht des Elektromotors.

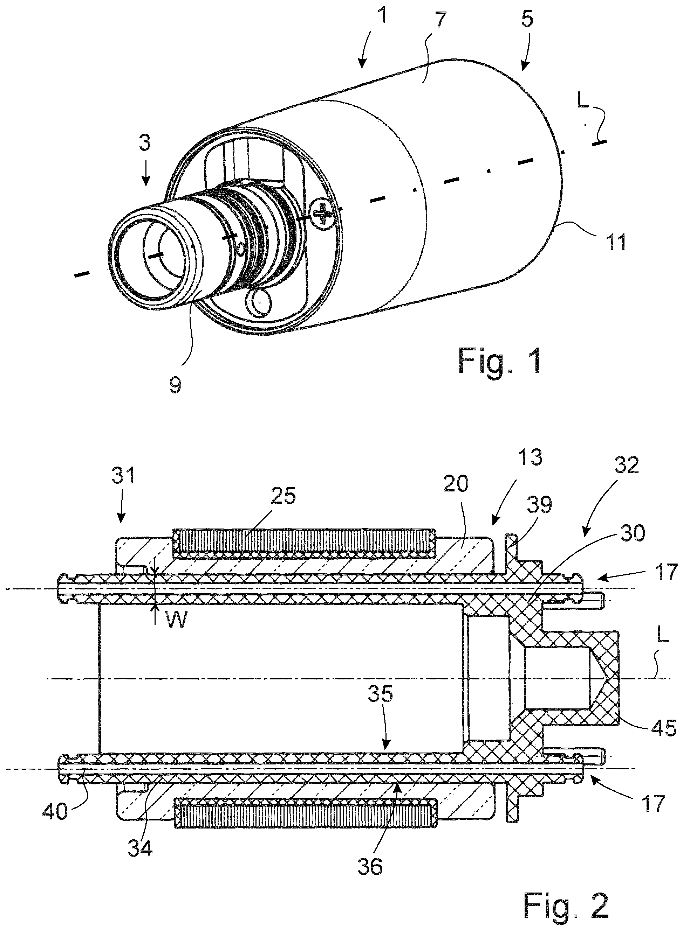

Fig. 1 zeigt einen Elektromotor 1 für dentale und medizinische Zwecke, insbesondere für den Antrieb eines rotierenden, dentalen oder medizinischen Instruments, in einer perspektivischen Darstellung. Der Elektromotor 1 umfasst ein Gehäuse 7, welches von einem Benutzer bei der Verwendung des Elektromotors 1 gegriffen wird. Es kann aus einem metallischen Material bestehen. Das Gehäuse 7 weitet sich von einer vorderen Stirnseite 3 bis zu einer hinteren Stirnseite 5 des Elektromotors 1 entlang einer Längsachse L leicht auf. Dies ist für die eigentliche Funktion jedoch unerheblich. An der vorderen Stirnseite 3 ist eine Kupplung 9 zur lösbaren Aufnahme eines dentalen oder medizinischen Instruments vorgesehen. An der hinteren Stirnseite 5 ist ein Verbindungsabschnitt 11 zur lösbaren Anbringung eines Versorgungsschlauchs 19 (hier nicht gezeigt) vorgesehen. Durch den Versorgungsschlauch 19 zugeführte Medien können insbesondere Wasser und Luft umfassen.

Fig. 2 zeigt den Stator 13, der einen Spulenträger 30 aufweist und konzentrisch zu der Längsachse L angeordnet ist. Er weist eine Hülse 34 auf, die eine weitgehend zylindrische Innenwandung 35 und eine ebenso weitgehend zylindrische Außenwandung 36 aufweist. Die Hülse 34 weist eine Wandstärke W auf. Der Spulenträger 30 trägt auf seiner Außenwandung 36 eine Wicklung 20, welche ein rotierendes elektromagnetisches Feld erzeugt. Die Wicklung 20 kann in mehrere Wicklungsabschnitte unterteilt werden, je nach gewünschtem Funktionsprinzip des Elektromotors 1.

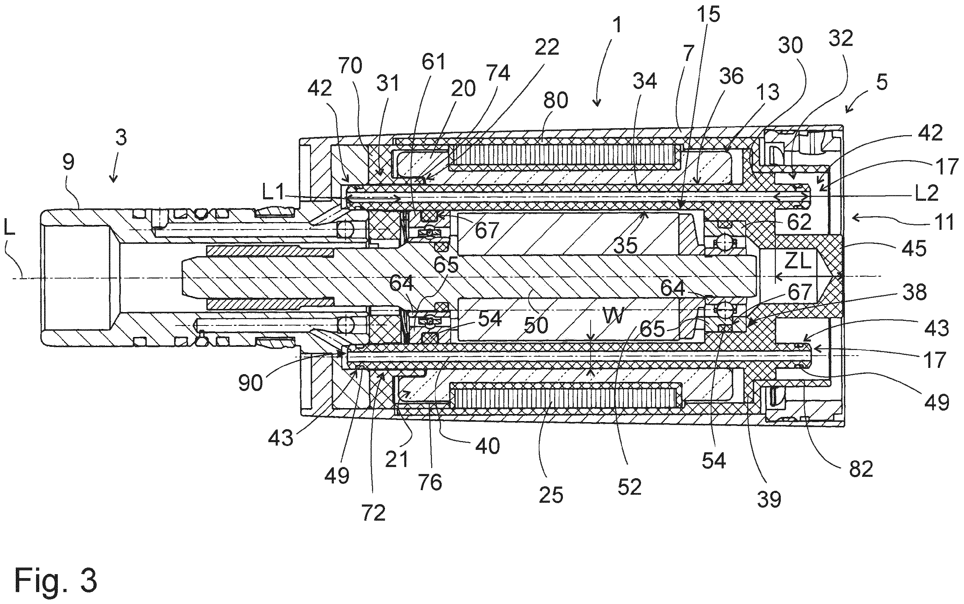

Der Rotor 15, gezeigt in Fig. 3, weist eine Welle 50 auf, die von einem ersten Lager 61 und einem zweiten Lager 62 in dem Spulenträger 30 gelagert ist. Hierzu weist der Spulenträger 30 an einem zu der hinteren Stirnseite 5 gewandten Bereich einen Absatz 38 auf, an den sich das zweite Lager 62 anschmiegen kann. Beide Lager 61 und 62 weisen einen Innenring 64 und einen Außenring 65 auf. Die Außenringe 65 weisen jeweils eine umlaufende Nut 67 auf, in die jeweils ein Elastomerelement 54 eingelassen ist. Das Elastomerelement 54 gleicht Zwangskräfte oder Dimensionsveränderungen innerhalb des Elektromotors aus, die insbesondere bei unterschiedlichen Lasten oder Temperaturen auftreten können. Das Elastomerelement 54 befindet sich dabei innerhalb des zylindrischen Bauraums des Rotors 15. Durch das Unterbringen des Elastomerelements 54 in der umlaufenden Nut 67 kann eine besonders kompakte Ausführung des Elektromotors erreicht werden.

Der Rotor 15 weist weiterhin Permanentmagneten 52 auf, durch den sich der Rotor 15 in Abhängigkeit des elektromagnetischen Feldes ausrichtet, das von der Wicklung 20 generiert wird, um ein Drehmoment zu erzeugen.

Der Spulenträger 30 ist aus einem isolierenden Material gebildet, insbesondere aus einem biokompatiblen, sterilisationsbeständigen Kunststoff, vorzugsweise einem Hochtemperaturpolymer. Er weist eine vordere Stirnseite 31 und eine hintere Stirnseite 32 auf. Zwischen beiden Stirnseiten 31 und 32 erstrecken sich Medienleitungen 40, welche in Form von längsaxialen Durchbrüchen, etwa Bohrungen, ausgeführt sind. Sie erstrecken sich insbesondere mittig durch eine Wandstärke W der Hülse 34. Dadurch ist es nicht erforderlich, separate Medienleitungen, üblicherweise aus einem metallischen Material, innerhalb des Gehäuses 7 bereitzustellen, die sowohl den erforderlichen Bauraum als auch das Gewicht und die Herstellkosten des Elektromotors 1 erhöhen würden. Gleichzeitig sind die erforderlichen Luft- und Kriechstrecken innerhalb des Elektromotors trotz der Medienleitungen 40 vorhanden.

An der vorderen Stirnseite 31 des Spulenträgers 30 ist eine Isolierkappe 70 angeordnet. Diese ist ebenso aus einem isolierenden Material hergestellt und erstreckt sich bis zum inneren Umfang des Gehäuses 7. Sie weist Durchbrüche 72 auf, die Anschlussenden 42 aufnehmen können, welche an den Medienleitungen 40 vorgesehen sind und mit einer Länge L1 über eine vordere Stirnseite 31 des Spulenträgers 30 vorsteht. Die Kupplung 9 kann Eintrittsöffnungen 90 aufweisen, in die die Medien aus den Medienleitungen 40 strömen können.

Die Isolierkappe 70 weist zudem einen hülsenartig geformten Innenkragen 74 auf, der zwischen den Spulenträger 30 und die Wicklung 20 greift. Folglich weist die Wicklung 20, insbesondere ein Wickelkopf 21 an dieser Stelle eine Einbuchtung 22 auf. Die Kriechstrecke ausgehend von der Wicklung 20 wird damit erhöht. Die Isolierkappe 70 weist zudem einen hülsenartig geformten Außenkragen 76 auf, der die Wicklung 20 radial von außen umgibt.

Der Elektromotor 1 umfasst zudem eine Isolierhülse 80, die zusammen mit dem Spulenträger 30 die Wicklung 20 radial innen- und außenliegend einschließen. Bevorzugt ist dabei die Isolierhülse 80 ebenso aus einem isolierenden Material hergestellt. Der Spulenträger 30, die Isolierkappe 70 und die Isolierhülse 80 kapseln folglich die Wicklung 20. Die Kapselung wird in axialer Richtung durch die Isolierkappe 70 an der vorderen Stirnseite 31 und der hinteren Stirnseite 32 durch einen Flansch 39 an dem Spulenträger 30 ergänzt. Der Flansch 39 erstreckt sich dabei im Wesentlichen in zu der Längsachse L vertikaler Richtung, d.h. radial. Beispielhaft erstreckt sich der Flansch 39 bis zu einer inneren Begrenzung der Isolierhülse 80.

An der hinteren Stirnseite 32 überlappen sich der Flansch 39 und die Isolierhülse 80 in axialer Richtung. An der vorderen Stirnseite 31 überlappen sich der Außenkragen 76 der Isolierkappe 70 und die Isolierhülse 80 in radialer Richtung. Durch die Überlappungen werden die Kriechstrecken enorm erhöht, ohne den Bauraum wesentlich zu erhöhen.

Ein Isolationskragen 82 ist vorgesehen, der Anschlusselemente 17, hier Anschlussenden 42 und Kontaktstifte 27 der Wicklung 20 und einer Beleuchtungseinheit 100 im Bereich der hinteren Stirnseite 5 des Elektromotors 1, radial umgibt. Der Isolationskragen 82 erstreckt sich in axialer Richtung so weit, dass die Luft- und Kriechstrecken bei angeschlossenem Versorgungsschlauch 19 realisiert werden. In dem gezeigten Ausführungsbeispiel ist der Schutzkragen 82 ein Teil der Isolierhülse 80.

Weiterhin umfasst der Stator 13 ein exemplarisch hohlzylindrisch geformtes Rückschlusselement 25, das den Spulenträger 30 umgibt und in dieser Ausführungsform weiterhin von der Isolierhülse 80 umgeben ist. Bevorzugt ist das Rückschlusselement 25 aus einem weichmagnetischen Material gebildet.

Zum Anschluss der Medienleitungen 40 sind Anschlussenden 42 vorgesehen, welche in diesem Beispiel an beiden Enden der Medienleitungen 40 vorgesehen sind. Sie erstrecken sich über eine erste Länge L1 und über eine zweite Länge L2 über der vorderen Stirnseite 31 bzw. der hinteren Stirnseite 32. Der Außendurchmesser AD der Anschlussenden 42 entspricht vorzugsweise der Wandstärke W des Spulenträgers 30. AD könnte allerdings auch geringfügig kleiner sein. An ihren äußeren Enden weisen sie jeweils eine Nut 43 auf, in denen jeweils ein Dichtring 49 sitzt. Mithilfe der Dichtringe 49 wird eine dichte Fluidverbindung an der vorderen Stirnseite 31 mit den Eintrittsöffnungen 90 in der Kupplung 9 und an der hinteren Stirnseite 32 mit einer komplementär zu den Anschlussenden 42 ausgeformten Ausbuchtung im Versorgungsschlauch 19 hergestellt.

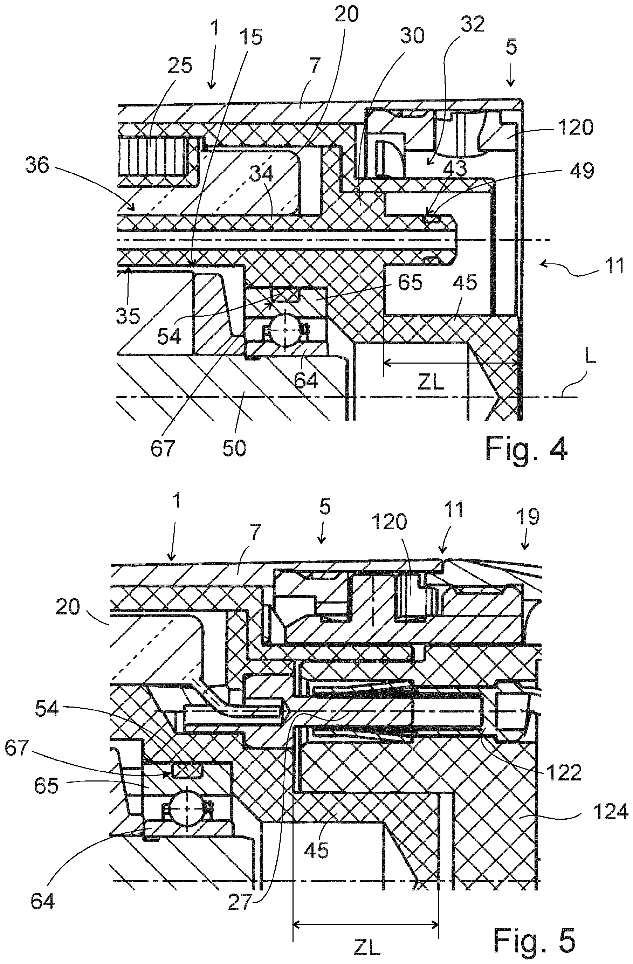

Fig. 4 zeigt einen Detailschnitt des Verbindungsabschnitts 11 des Elektromotors 1. Dort ist ein Bajonettring 120 vorgesehen, der zum Anbringen eines komplementär ausgeformten Versorgungsschlauchs 19 ausgebildet ist. Eine Reinigung, insbesondere eine Sterilisation des Elektromotors 1 wird durch Abnehmen des Versorgungsschlauchs 19 erleichtert.

In Fig. 5 ist ein Versorgungsschlauch 19 an dem Verbindungsabschnitt 11 angeordnet und mit dem Bajonettring 120 verbunden. Die Schnittebene weicht von der in Fig. 4 ab und ist durch einen Kontaktstift 27 gebildet und zeigt zusätzlich den Versorgungsschlauch 19. Der Versorgungsschlauch 19 weist Kontaktbuchsen 122 auf, die zu den Kontaktstiften 27 und den weiter nachfolgend erläuterten Kontaktstiften 102 korrespondierend geformt und positioniert sind, sodass durch Anstecken des Versorgungsschlauchs 19 ein elektrischer Kontakt durch Verbindung der Kontaktbuchsen 122 mit den Kontaktstiften 27 und 102 hergestellt wird. Das Anbringen des Versorgungsschlauchs 19 kann durch einen Zentrierzapfen 45 mit einer Länge ZL erleichtert werden, an dem ein Steckerelement 124 des Versorgungsschlauchs 19 ausgerichtet wird.

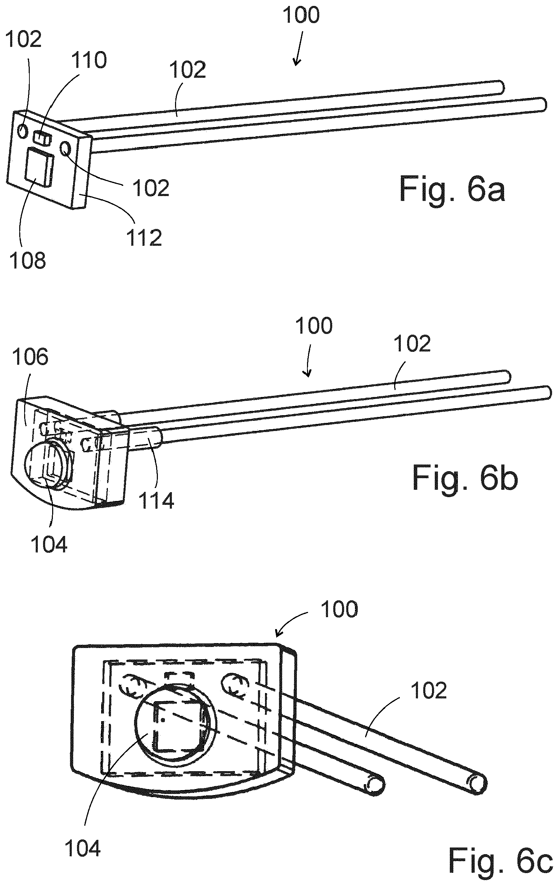

Fig. 6a bis 6c zeigen in verschiedenen Details die Beleuchtungseinheit 100. Fig. 6a zeigt die Beleuchtungseinheit ohne Ummantelung 106 mit ihren elektrischen Bauteilen, wie die Lichtquelle 108, vorzugsweise eine LED, einen Widerstand 110, ein Trägerelement 112 für elektronische Bauteile und Kontaktstifte 102. Fig. 6b zeigt die Ummantelung 106, die vorzugsweise aus einem isolierenden Material besteht und alle elektrischen Bauteile vollständig bzw. die Kontaktstifte 102 teilweise ummantelt. Die teilweise Ummantelung der Kontaktstifte kann auch, wie in Fig. 6b gezeigt, durch isolierende Hülsen 114 geschehen, die bündig mit der Ummantelung 106 sind oder in diese übergehen. Somit kommt es zu keiner Unterbrechung der Isolation zwischen der Ummantelung 106 und den Hülsen 114. Die Beleuchtungseinheit 100 umfasst ein optisches Element 104, beispielsweise eine Fokussier-Linse, das Teil der transparenten Ummantelung 106 ist.

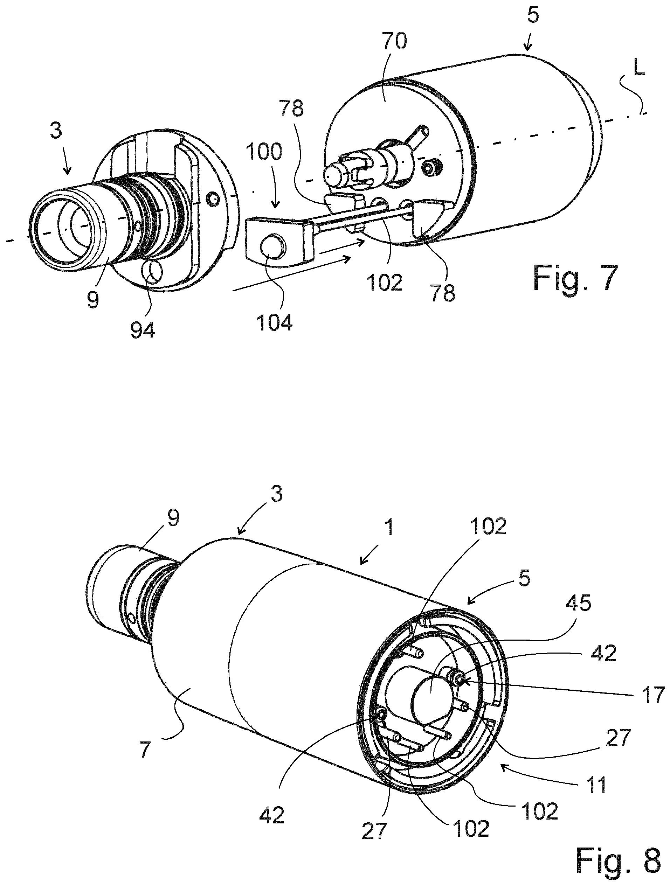

Fig. 7 zeigt die Installation der Beleuchtungseinheit 100 zwischen Erhebungen 78 der Isolierkappe 70. Die Kontaktstifte 102 der Beleuchtungseinheit 100 können durch die Isolierkappe 70 und den Spulenträger 30 gesteckt werden und können über die hintere Stirnseite des Spulenträgers 32 hinausragen. Die Beleuchtungseinheit 100 besitzt ein optisches Element 104, das in einer Lichtaustrittsöffnung 94 der Kupplung 9 oder direkt darunter platziert ist und im Wesentlichen entlang der Längsachse L Licht abgibt. Die Beleuchtungseinheit 100 nimmt zwischen zwei Erhebungen 78 der Isolierkappe 70 Platz.

Fig. 8 zeigt schließlich die hintere Stirnseite 5 des Elektromotors 1 mit den Anschlusselementen 17 umfassend die Anschlussenden 42 die Kontaktstiften 27 und 102 in dem Verbindungsabschnitt 11, mit dem der Versorgungsschlauch 19 verbindbar ist.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichen liste

- L: Längsachse
- L1: Länge
- L2: Länge
- W: Wandstärke
- ZL: Länge des Zentrierzapfens
- AD: Außendurchmesser

- 1: Elektromotor
- 3: vordere Stirnseite des Elektromotors
- 5: hintere Stirnseite des Elektromotors
- 7: Gehäuse
- 9: Kupplung
- 11: Verbindungsabschnitt
- 13: Stator
- 15: Rotor
- 17: Anschlusselemente
- 19: Versorgungsschlauch

- 20: Wicklung
- 21: Wickelkopf
- 22: Einbuchtung
- 25: Rückschlusselement
- 27: Kontaktstift Wicklung

- 30: Spulenträger
- 31: vordere Stirnseite Spulenträger
- 32: hintere Stirnseite Spulenträger
- 34: Hülse
- 35: Innenwandung
- 36: Außenwandung
- 38: Absatz
- 39: Flansch
- 40: Medienleitung
- 42: Anschlussende
- 43: Nut (Anschlussende)
- 45: Zentrierzapfen
- 49: Dichtring

- 50: Welle
- 52: Permanentmagnet
- 54: Elastomerelement

- 61: erstes Lager
- 62: zweites Lager
- 64: Innenring
- 65: Außenring
- 67: Nut (Lager)

- 70: Isolierkappe
- 72: Durchbrüche
- 74: Innenkragen
- 76: Außenkragen
- 78: Erhebung

- 80: Isolierhülse
- 82: Isolationskragen

- 90: Eintrittsöffnung
- 94: Lichtaustrittsöffnung

- 100: Beleuchtungseinheit
- 102: Kontaktstift Beleuchtungseinheit
- 104: optisches Element
- 106: Ummantelung
- 108: Lichtquelle (LED)
- 110: Widerstand
- 112: Trägerelement
- 114: Hülsen
- 120: Bajonettring
- 122: Kontaktbuchsen
- 124: Steckerelement

## Patentansprüche

1. Elektromotor (1) für dentale und medizinische Zwecke, insbesondere für den Antrieb eines rotierenden dentalen oder medizinischen Instruments, umfassend
▪ ein Gehäuse (7),
▪ einen in dem Gehäuse (7) angeordneten Stator (13) mit einem Spulenträger (30), der zumindest abschnittsweise eine Wicklung (20) trägt,
▪ einen in dem Stator (13) um eine Längsachse (L) drehbar gelagerten Rotor (15), der konzentrisch von dem Stator (13) umschlossen ist,
**dadurch gekennzeichnet, dass** der Spulenträger (30) wenigstens eine Medienleitung (40) bildet, wobei jede Medienleitung (40) einteilig, vorzugsweise monolithisch, mit dem Spulenträger (30) ausgebildet ist.

2. Elektromotor (1) nach einem der vorangehenden Ansprüche, **dadurch gekennzeichnet, dass** der Spulenträger (30) eine Hülse (34) mit einer weitgehend zylindrischen Wandung (35, 36) aufweist.

3. Elektromotor (1) nach Anspruch 1 oder 2, **dadurch gekennzeichnet, dass** die wenigstens eine Medienleitung (40) als ein Durchbruch in der Hülse (34) ausgebildet ist.

4. Elektromotor (1) nach einem der vorangehenden Ansprüche, **dadurch gekennzeichnet, dass** mindestens eine der Medienleitungen (40) mindestens ein Anschlussende (42) aufweist, das über eine Stirnseite (31, 32) des Spulenträgers (30) vorsteht.

5. Elektromotor (1) nach Anspruch 4, **dadurch gekennzeichnet, dass** der Außendurchmesser (AD) des mindestens einen Anschlussendes (42) der mindestens einen Medienleitung (40) höchstens einer Wandstärke (W) des Spulenträgers (30) entspricht.

6. Elektromotor (1) nach einem der vorhergehenden Ansprüche, **dadurch gekennzeichnet, dass** der Spulenträger (30) an einer hinteren Stirnseite (32) einen Flansch (39) aufweist, der in axialer Richtung einen Anschlag für die Wicklung (20) bildet und/oder der Spulenträger (30) von einer separaten Isolierhülse (80) umgeben ist und wobei der Spulenträger (30) und die Isolierhülse (80) gemeinsam die Wicklung (20) radial einschließen.

7. Elektromotor (1) nach einem der vorangehenden Ansprüche, **dadurch gekennzeichnet, dass** der Spulenträger (30) an der vorderen Stirnseite (31) oder an einer gegenüberliegenden hinteren Stirnseite (32) zumindest abschnittsweise zylinderförmig ausgebildet ist und eine Isolierkappe (70) trägt.

8. Elektromotor (1) für dentale und medizinische Zwecke, insbesondere für den Antrieb eines rotierenden dentalen oder medizinischen Instruments, umfassend
▪ ein Gehäuse (7),
▪ einen in dem Gehäuse (7) angeordneten Stator (13), mit einem Spulenträger (30), der zumindest abschnittsweise eine Wicklung (20) trägt,
▪ einen in dem Stator (13) um eine Längsachse (L) drehbar gelagerten Rotor (15), der konzentrisch von dem Stator (13) umschlossen ist,
**dadurch gekennzeichnet,**
a) **dass** der Spulenträger (30) hülsenförmig ausgebildet ist und eine zylindrische Wandung (35, 36) mit definierter Wandstärke (W) aufweist,
b) **dass** der Spulenträger (30) an einer Stirnseite (31, 32) einen Flansch (39) aufweist und an einer entgegengesetzt angeordneten Stirnseite (31, 32) offen ausgebildet ist,
c) **dass** auf die offene Stirnseite (31, 32) eine Isolierkappe (70) aufgesetzt ist,
d) **dass** der Spulenträger (30) von einer separaten Isolierhülse (80) umgeben ist,
e) wobei der Spulenträger (30), der Flansch (39), die Isolierkappe (70) und die Isolierhülse (80) gemeinsam die Wicklung (20) einschließen,
f) wobei sich zumindest zwei des Spulenträgers (30), des Flanschs (39), der Isolierkappe (70) und der Isolierhülse (80) zumindest abschnittsweise überlappen.

9. Elektromotor (1) nach Anspruch 8, **dadurch gekennzeichnet, dass** die Isolierkappe (70) einen Innenkragen (74) aufweist, der zwischen den Spulenträger (30) und die Wicklung (20) greift, wobei ein Wickelkopf (21) der Wicklung (20) eine Einbuchtung (22) aufweist, in die der Innenkragen eingreifen kann und/oder die Isolierkappe (70) an einer dem Spulenträger (30) zugewandten Seite einen Außenkragen (76) aufweist, der die Wicklung (20) zumindest abschnittsweise umschließt.

10. Elektromotor (1) nach Anspruch 8 oder 9, **dadurch gekennzeichnet, dass** ein Isolationskragen (82) vorgesehen ist, der Anschlusselemente (17, 27, 42, 102) am Verbindungsabschnitt (11) radial einschließt und dessen axiale Länge so gewählt ist, dass vorgegebene Luft- und Kriechstrecken erfüllt werden.

11. Elektromotor (1) für dentale und medizinische Zwecke, insbesondere für den Antrieb eines rotierenden dentalen oder medizinischen Instruments, umfassend
▪ ein Gehäuse (7),
▪ einen in dem Gehäuse (7) angeordneten Stator (13), mit einem Spulenträger (30), der zumindest abschnittsweise eine Wicklung (20) trägt,
▪ einen in dem Stator (13) um eine Längsachse (L) drehbar gelagerten Rotor (15), der konzentrisch von dem Stator (13) umschlossen ist, und
▪ eine Kupplung (9) zur lösbaren Aufnahme des dentalen oder medizinischen Instruments,
**dadurch gekennzeichnet,**
g) dass eine einstückige Beleuchtungseinheit (100) vorgesehen ist, die mindestens eine Lichtquelle (108) aufweist, die dazu ausgebildet ist, Licht aus einer Lichtaustrittsöffnung (94) in oder an der Kupplung (9) abzugeben, wobei zumindest die Lichtquelle (108) mit einer isolierenden, sterilisationsbeständigen Ummantelung (106) isoliert ist.

12. Elektromotor (1) nach Anspruch 11, **dadurch gekennzeichnet, dass** die Beleuchtungseinheit (100) in die Isolierkappe (70) eingesetzt ist und/oder die Beleuchtungseinheit (100) Kontaktstifte (102) und ein Trägerelement (112) aufweist, wobei die Beleuchtungseinheit (100) bis auf die Kontaktstifte (102) vollständig mit der Ummantelung (106) isoliert ist und wobei die Kontaktstifte (102) zumindest abschnittsweise ummantelt sind.

13. Elektromotor (1) für dentale und medizinische Zwecke, insbesondere für den Antrieb eines rotierenden dentalen oder medizinischen Instruments, umfassend
▪ ein Gehäuse (7),
▪ einen in dem Gehäuse (7) angeordneten Stator (13), mit einem Spulenträger (30), der zumindest abschnittsweise eine Wicklung (20) trägt,
▪ einen in dem Stator (13) um eine Längsachse (L) drehbar gelagerten Rotor (15), der konzentrisch von dem Stator (13) umschlossen ist, und
▪ wobei zwischen dem Stator (13) und dem Rotor (15) mindestens ein Lager (61, 62) angeordnet ist,
**dadurch gekennzeichnet,**
h) dass das mindestens eine Lager (61, 62) eine Aufnahme zum Aufnehmen eines Elastomerelements (54) aufweist und gegenüber dem Spulenträger mittels des Elastomerelements (54) schwimmend gelagert ist.

14. Elektromotor (1) nach Anspruch 13, **dadurch gekennzeichnet, dass** das mindestens eine Lager (61, 62) einen Innenring (64) und einen Außenring (65) aufweist, wobei das Elastomerelement (54) in einer umlaufenden Nut (67) als Aufnahme im Außenring (35) eingelassen ist.

15. Elektromotor (1) nach einem der vorangehenden Ansprüche, **dadurch gekennzeichnet, dass** der Spulenträger (30) aus einem Kunststoff gefertigt ist, vorzugsweise aus einem biokompatiblen, sterilisationsbeständigen, isolierenden Kunststoff.
